# EUROPEAN PATENT APPLICATION

(11) **EP 4 109 808 A1**
(43) Date of publication of application: **28.12.2022**
(21) Application number: 21181428.0
(22) Date of filing: 24.06.2021
(51) Int. Cl.: H04L 9/06, G01F 15/06

(54) **METHOD FOR ENCRYPTING DATA AND TRANSMITTING ENCRYPTED DATA IN A REMOTE TRANSFER OF USER DATA**

(71) Applicant: Sensus Spectrum, LLC, Morrisville, NC 27560 (US)
(72) Inventor: BAUMANN, Joachim, 74629 Pfedelbach (DE)
(74) Representative: Patentanwälte Dr. Keller, Schwertfeger Partnerschaft mbB

(57) **Abstract**

The present invention relates to a method for encrypting data and transmitting encrypted data in a remote transfer of user data, the method using initialization vectors, wherein the creation of a plurality of different initialization vectors comprises the following steps: Providing the actual time of day, a constant day time grid with time slots Uₗ and an initial time slot U₀ having a first period t₁, and a counter Z with counter values Zₙ having an initial counter value Z₀. Creating an adapted time D with an adapted time value Dₘ and an initial adapted time value D₀. For using in an initialization vector the adapted time value D₀ and the initial counter value Z₀ are combined. Changing the initial counter value Z₀ to a new counter value Z₁= Z₀ +i, i being a figure. Combining the adapted time value D₀ and the new counter value Z₁ for defining a new initialization vector.

## Description

The present invention relates to a method for encrypting data and transmitting encrypted data in a remote transfer of user data, wherein the method uses initialization vectors.

It is more and more common to transfer data in a communication network. The communication network might be a closed network accessible only by authorized persons as for example in a company or an open network accessible for everyone. Especially in an open network there is a very high risk of data theft and misuse of data. Even in closed networks there is still a risk that an unauthorized third person gets access to the network and abuses the data transferred in the closed network. In wireless communication networks the risk of data theft and misuse of data is much higher than in wired networks.

Therefore it is common to encrypt sensitive data to avoid a misuse of data by an unauthorized person in the case of data theft.

One known application of remotely transferring data in a communication network is the transfer of consumption data collected by a flowmeter. Flowmeters or more generally speaking consumption meters are installed in a household and collect consumption data with respect to the consumed water, gas, heat or electricity over many years. The consumption data collected by a flowmeter or a consumption meter are transmitted to a read out unit. The read out unit might be a stationary unit as a computer in a building or a mobile unit as a mobile hand held unit. In case of the use of a mobile unit, a person walks or drives outside the houses past the households having flowmeters or consumption meters and gathers the data sent by the flowmeters or consumption meters installed in the households via the mobile unit. The data gathered by the read out units are the basis for calculating the consumption costs of a household having flowmeters or consumption meters.

The consumption data of the flowmeter or the consumption meter are sensitive data as they give information about the private life of members of a household. Thus, the consumption data measured by the flowmeter or consumption meter and transferred remotely to a read out unit have to be protected from the misuse by an unauthorized person. This is usually done in that the data measured by the flowmeter are encrypted before transmission to a read out unit.

In some cases it is also important to prevent manipulation of the transferred data.

For example in a network transferring consumption data, consumption meters like water meters, gas meters or electricity meters are installed in a house for measuring the consumption of water, gas or electricity. The consumption data measured by the flowmeter are transferred via the network to a read out unit. As mentioned above, the consumption data obtained by the read out unit are the basis for the calculation of the individual consumption costs. In this case it must be ensured that the read out unit gets the original data from the assigned consumption meter and not manipulated data. Further, it must be ensured that the data collected by a read out unit are in fact the data from the assigned consumption meter and not from any other consumption meter.

In this case it is advisable to add a message authentication code (MAC) to the transferred data in order to find out if the transferred data are the data measured by the associated consumption meter and if the data obtained by the read out unit are the originally measured data or manipulated data. This is usually done by an authentication operation.

Initialization vectors are often used for encryption operations and authentication operations.

In this kind of encryption operation, often a secret key known by the receiver and the transmitter and an initialization vector are combined. Receiver and transmitter use the same secret key, which remains constant while the initialization vector is different for different encryption operations. The initialization vector ensures that each encryption operation has a different code. Using the same initialization vector for different encryption and authentication operations lowers the data security in that the encryption code might be decrypted by an unauthorized person in the case of data theft.

The initialization vector must be known by the transmitter of an encrypted telegram and by the receiver of the encrypted telegram.

In order to avoid using the same initialization vector twice or more often, the initialization vector might be a counter, incrementing each time when an encrypted telegram is formed. This solution is only applicable in systems in which each telegram is decrypted by the receiver. Each time the receiver decrypts an encrypted telegram, the initialization vector being a counter is incremented in the receiver.

However, in some networks the transmitter sends more encrypted telegrams than the receiver decrypts. The receiver does not know how often the transmitter has sent a telegram. Thus, the initialization vector in the transmitter and in the receiver differs after several encrypted transmissions. Additionally, transmissions can be lost, for example when interference may occur or when the radio-channel fades. All this leads to difficulties in decrypting the encrypted data by the receiver.

In a network of remotely read out consumption meters the user of the mobile unit does not want to wait for hours until he gets a data telegram containing the information about the consumption data. Therefore, the consumption meter sends encrypted telegrams on a very short time scale. The consumption meter sends a lot of encrypted telegrams which will never be received by a readout unit. The number of sent encrypted telegrams and the number of received encrypted telegrams differ in this application.

Consequently, the information about the counter value has to be transferred or contained in the telegram each time the transmitter sends an encrypted telegram. This leads to an increasing telegram length.

The encryption of each telegram requires a lot of energy. The consumption meters installed in a house are powered by a battery. As consumption meters are installed for many years, the life time of a battery is an important issue for a proper function of the consumption meter. Encryption operation requiring a lot of energy decreases the life time of the battery used in the flowmeter for collecting consumption data, as for example for a water meter.

It has been found that long telegram length (high number of Bytes) increases the power consumption of the battery of the meter unit and decreases the life time of a battery used in the flowmeter. Additionally, it is known that short telegram length (low number of Bytes) decreases the packet error rate compared to long telegram length.

An extended telegram length is not desired.

In the above mentioned application, a counter being for example an integer being incremented cannot be used for forming an initialization vector.

Another possibility for getting an individual initialization vector is the use of the time. In general, the transmitter and the receiver have an internal clock. The real time or actual time can be used for getting an individual initialization vector for each transmission of a data telegram. For example, the actual time of the internal clock of a transmitter is used for creating an initialization vector. The receiver knowing the actual time by its internal clock has the necessary information for decrypting the thus encrypted data telegram.

In practice the real time is for example the world time counted in seconds starting from the year 2000. Thus, transmitter and receiver have the same counting value. The counting value being the same in the transmitter and the receiver can be used for an individual initialization vector each time the transmitter sends an encrypted telegram.

It is obvious that in this case time shifts in the transmitter and the receiver with respect to the world time will lead to different individual initialization vectors causing troubles in decrypting the encrypted telegram by the receiver. This issue might be overcome by setting the internal time of the receiver and the transmitter via GPS. However, it is not always possible to do this. Flowmeters are installed in a house for many years and are not controlled via GPS. In flowmeters, time shifts of more than a minute or even of more than an hour with respect to the world time over a long period of use are normal.

In order to overcome the issue of the time shift the individualization of the initialization vector might be done on an hourly basis of the time. Changing the individual initialization vector on an hourly basis is a feasible way for transmitting data with a very low frequency for example, by transmitting data only twice or three times a day.

In some applications of remotely read out flowmeters, data measured by a transmitter will be sent with a very high frequency to offer the possibility of receiving the data by a receiver whenever required. Often more than one telegram is sent during one minute for providing data whenever required. For example in a communication network in which consumption data collected by a flowmeter are transmitted and received by a mobile read out unit, the employee must be able to get the consumption data without waiting for a long time until the data are sent by the flowmeter. Thus, data measured by the flowmeter are transferred within a frequency of less than a minute. Increasing the time interval for sending telegrams in order to reduce the influence of a shifted time in a flowmeter is not a desired way.

It is an object of the present invention to provide a method for encrypting data and transmitting encrypted data in a remote transfer of user data which is safe against manipulation or misuse of the transferred data, which is energy saving for increasing the life time of the battery of a communication unit used for transferring the data and wherein the telegram length is as short as possible.

It is a further object of the present invention to provide a method for encrypting data and transmitting encrypted data in a remote transfer of user data which additionally provides the possibility of the transmitter of the transmitted data being identified by the receiver.

Especially it is an object of the present invention to provide a method for encrypting data and transmitting encrypted data in a remote transfer of user data overcoming the above mentioned problems, wherein the method uses initialization vectors.

The object is solved by a method according to claim 1.

In detail, the object of the present invention is solved by a method for encrypting data and transmitting encrypted data in a remote transfer of user data, the initialization vectors being created by the following steps:

Firstly, the actual time of day and a constant day time grid with time slots Uₗ having a first period t₁ are provided. Then an initial time slot U₀ is defined, wherein the actual time of day lies in the period of the initial time slot U₀ of the day time grid. Additionally, a counter Z with counter values Zₙ having an initial counter value Z₀ is defined. An adapted time D with adapted time value Dₘ is created, the adapted time values Dₘ having an initial adapted time value D₀ within the initial time slot U₀. For using in an initialization vector the adapted time value D₀ and the initial counter value Z₀ are combined. Then, the initial counter value Z₀ is changed to a new counter value Z₁= Z₀ +i, i being a figure, preferably an integer. As a next step, the adapted time value D₀ and the new counter value Z₁ are combined for defining a new initialization vector. The steps in which the counter value Zₙ is changed to a new counter value Zₙ₊₁= Zₙ +i, the adapted time value D₀ and the new counter value Zₙ₊₁ are combined for using them in a new initialization vector and are repeated until the actual time is outside the initial time slot U₀. Finally, the initial time slot U₀ is set to the subsequent time slot U₁, the counter value Zₙ₊₁ is set to the initial counter value Z₀ and another adapted time value D₁ is created, with the adapted time value D₁ being a time value within the subsequent time slot U₁.

In this method I, m, n are integers, preferably incrementing figures like 0, 1, 2, 3, 4.....

The counter value Zₙ might be incremented or decremented. It is an advantage if the counter value Zₙ is a positive or negative integer. The value of i is not necessary the same for each incremental or decremental step.

The combined adapted time value Dₘ and the initial counter value Zᵢ might be used as initialization vector. However, an initialization vector might also contain additional parts. Additionally or as an alternative, the adapted time value Dₘ and/or the initial counter value Zᵢ might be treated for forming the initialization vector.

According to a preferred embodiment, the above described method can be performed as long as desired, if the following steps:
e) combining the initial adapted time value D₀ and the initial counter value Z₀ for using in an initialization vector,
f) changing the initial counter value Z₀ to a new counter value Z₁= Z₀ +i, i being a figure, preferably an integer;
g) combining the initial adapted time value D₀ and the new counter value Z₁ for using in a new initialization vector,
h) repeating the steps f) and g), wherein in step g) the new counter value Zₙ₊₁ is set to Zₙ +i, until the actual time is outside the initial time slot,
i) setting the initial time slot U₀ to the subsequent time slot U₁, setting the counter value Zₙ₊ᵢ to the initial counter value Z₀ and creating another adapted time value D₁, with the adapted time value D₁ being a time value within the subsequent time slot U₁
   are repeated as long as desired.

The described method is applicable in any communication unit. Especially, it is applicable in transceivers, receivers or transmitters.

The basic idea of the invention is that an initialization vector combines a counter value Zₙ, being preferably a figure and a time value Dₘ within a given time slot Uₗ. The time value Dₘ changes with each time slot Uₗ of the day time grid. The counter value Zₙ can be reset when a new time slot Uₗ of the day time grid begins. A receiver knowing the time slots Uₗ of a transmitter and the counter value Zₙ at least at the beginning of the time slot Uₗ of the day time grid or at the end of the time slot Uₗ of the day time grid, respectively is able to reliably decrypt an encrypted telegram using an initialization vector as described.

The advantage of the method is that an initialization vector contains information about the actual time wherein the information about the time can be used by the transmitter and the receiver independent of existing time shifts in a transmitter or a receiver.

In order to get the identical day time grid in a receiver and in a transmitter an initial value of the day time grid is set.

It is preferred that the adapted time value Dₘ is a constant time value within the actual time slot Uₗ, in that within the actual time slot Uₗ the adapted time value Dₘ for forming an initialization vector will always be the same. The adapted time value Dₘ will only be changed if the time slot Uₗ has changed.

It is further preferred that the adapted time value Dₘ is shortened. The adapted time value Dₘ can be rounded or truncated. This has the advantage that a time shift between the internal clock of a transmitter and the internal clock of a receiver can be compensated.

It is advantageous if an initial value for each time slot Uₗ is defined, wherein the adapted time value Dₘ is the first value of each time slot Uₗ. In this case the adapted time value Dₘ contains additional information about the transmitter, namely the beginning of a time slot Uₗ of the day time grid being helpful for decrypting the encrypted data in case of a large time shift between receiver and transmitter.

Especially for the application in remote reading of consumption data it is preferred that the first period t₁ is in the range of hours and in that the counter value Zₙ is changed in the range of minutes. This enables the transmitter to send encrypted telegrams with a high frequency.

According to a preferred embodiment the counter value Zₙ is changed periodically with a frequency having a period t₂. A receiver knowing the frequency with which the counter value Zₙ is changed and knowing the time slots Uₗ as well as the adapted time value will have all necessary information of the initialization vector for decrypting all encrypted telegrams. The risk that there might be trouble with decrypting an encrypted telegram is minimized.

In a special embodiment, the ratio of the first period t₁ to the second period t₂ is an integer. In this case the second period t₂ is repeated several times completely within the first period t₁. This ensures that the counter cycles always start at the beginning of a time slot Uₗ of the day time grid.

According to a preferred method, the creation of a plurality of different initialization vectors comprises the following steps:
Firstly, the actual time of day and a constant day time grid with time slots Uₗ having a first period t₁ are provided. Then an initial time slot U₀ is defined, wherein the actual time of day lies in the period of the initial time slot U₀ of the day time grid. Additionally, a counter Z with counter values Zₙ having an initial counter value Z₀ and a time grid for the counter values Zₙ are defined, the time grid having a time slot of a second period t₂ being shorter than the first period t₁. An adapted time D with adapted time values Dₘ is created with the adapted time values Dₘ having an initial adapted time value D₀ within the initial time slot U₀ and being a rounded time value. For using the adapted time value D₀ and the initial counter value Z₀ in an initialization vector, the adapted time value D₀ and the initial counter value Z₀ are combined. Then, the initial counter value Z₀ is changed to a new counter value Z₁= Z₀ +i, i being a figure, preferably an integer, each time the second period t₂ ends. As a next step, the adapted time value D₀ and the new counter value Z₁ are combined for using them in a new initialization vector. The steps in which the counter value Zₙ is changed to a new counter value Zₙ₊₁= Zₙ +i, the adapted time value D₀ and the new counter value Zₙ are combined for using them in a new initialization vector are repeated until the actual time is outside the initial time slot U₀. Then, the actual time slot U₀ is set to the subsequent time slot U₁, the counter value Zₙ₊ᵢ is set to the initial counter value Z₀ and an adapted time value D₁ is created, with the adapted time value D₁ being a shortened time value within the subsequent time slot U₁.

Also, in this method, the steps
e) combining the initial adapted time value D₀ and the initial counter value Z₀ for using in an initialization vector,
f) changing the initial counter value Z₀ to a new counter value Z₁= Z₀ +i, i being a figure, preferably an integer if the second period t₂ ends,
g) combining the adapted time value D₀ and the new counter value Z₁ for using in a new initialization vector,
h) repeating the steps f) to g), wherein in step f) the new counter value Zₙ₊₁ is set to Zₙ +i, until the actual time is outside the initial time slot U₀,
i) setting the actual time slot U₀ to the subsequent time slot U₁, setting the counter value Zₙ₊ᵢ to the initial counter value Z₀ and creating an adapted time value D₁, with the adapted time value D₁ being a shortened time value within the subsequent time slot U₁,
   are repeated as long as desired, wherein in step i) the adapted time value Dₘ is set to a time value within the subsequent time slot Uₘ following the time slot Uₘ₋₁.

In this method, as described, the change of the counter value Zₙ depends on a period given by the time grid. As the time grid of the counter value Zₙ and the time grid of the actual time of day can be correlated and matched in case of a time shift, the influence of a time shift between receiver and transmitter can be minimized.

It is preferred that the initialization vector is used with data for forming an encrypted data telegram.

According to a preferred embodiment, an encrypted data telegram is formed and the encrypted data telegram is transmitted at least two times. This feature increases the rate of availability of transmitted data at the receiver without requiring additional encryption operation.

It is further preferred that a time grid for the counter value Zₙ is provided, wherein the time grid has a time slot of a second period t₂ being shorter than the first period t₁, wherein an encrypted data telegram is formed and the encrypted data telegram is transmitted at least two times within the second period t₂. This step is useful if data have to be provided with a very high frequency as for example for remote reading consumption data by a reading unit without increasing the power consumption of the battery.

Within the described methods it is planned that also unencrypted data are transmitted. These unencrypted data might be for example used for transmitting information about the internal time of the transmitter or for sending an alarm. The unencrypted data might be sent whenever required.

In a network comprising flowmeters to be read out remotely, it is an advantage that a Message Authentication Code (MAC) is added to the encrypted data. It is obvious that also in other networks transferring encrypted data a MAC might be added to the encrypted data.

In order to provide a very short telegram length it is foreseen that the MAC is cut in defined segments. It is further preferred that each segment is transferred in successive transferred data telegrams. Thus, the telegram lengths might be kept at a short length. The risk of unnoticed manipulation of the message data is kept low as successively transferred data can be combined for getting the whole MAC. In this method, it is an advantage if the content of the sent data telegram is always the same.

Preferred embodiments will be explained with respect to the enclosed figures, in which:
- Fig. 1: shows a time diagram of a method for creating a plurality of initialization vectors;
- Fig. 2: shows a flow diagram of a method for creating a plurality of initialization vectors;
- Fig. 3: shows a concrete example of a method for creating a plurality of initialization vectors;
- Fig. 4: shows a flow diagram of a first method for encrypting data and transmitting encrypted data in a remote transfer of user data using a plurality of initialization vectors;
- Fig. 5: shows a flow diagram of a second method for encrypting data and transmitting encrypted data in a remote transfer of user data using a plurality of initialization vectors;
- Fig. 6: shows a flow diagram of a third method for encrypting data and transmitting encrypted data in a remote transfer of user data using a plurality of initialization vectors;
- Fig. 7: shows a part of a method for encrypting data and transmitting encrypted data containing a message authentication code (MAC).

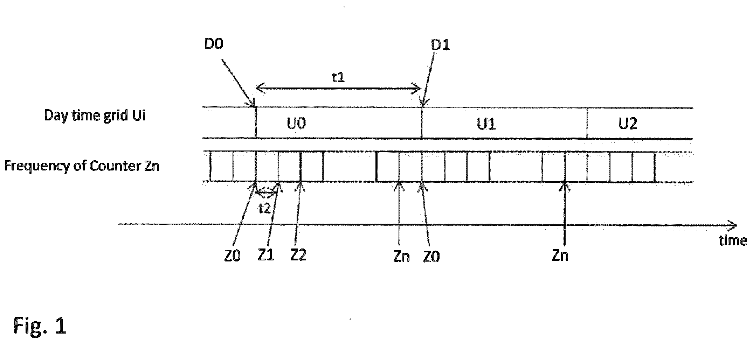

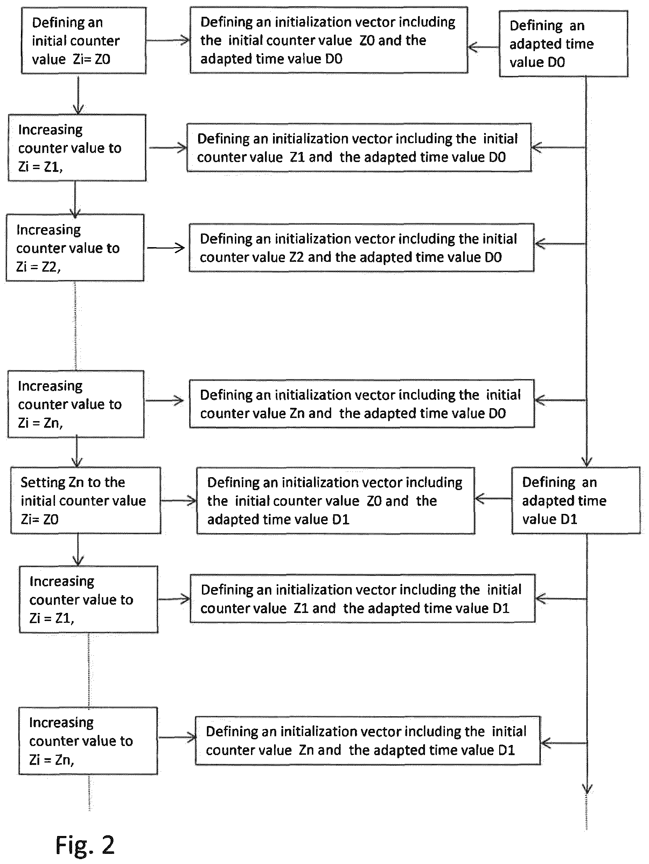

Figures 1 and 2 show a method for defining a plurality of initialization vectors.

An initialization vector (IV) is usually used for the creation of an encrypted telegram containing sensitive message data, wherein the encrypted telegram is formed in a communication unit. The communication unit is usually part of a network comprising a plurality of receivers and transmitters. The communication unit might be a receiver, a transmitter or a unit being able to send and receive data as a transceiver.

In a special embodiment, the communication unit is either a flowmeter or a read out unit, wherein the flowmeter and read out unit might be a transmitter and/or a receiver. The flowmeter or the read out unit is part of a network of remotely read out flowmeters.

The method described is performed in a communication unit working as a transmitter or a receiver like a flowmeter or a read out unit. However, it is applicable in any communication unit having an internal clock.

The flowmeters are installed in a household and collect consumption data with respect to consumed water over many years. The consumption data measured by a flowmeter are transmitted to a read out unit. The read out unit might be a stationary unit as a computer in a building or a mobile unit as a mobile hand held unit. In case a mobile unit is used, a person walks or drives outside the houses past the households having flowmeters and gathers the data sent by the flowmeters in the households via the mobile unit. The data gathered by the read out units are the basis for calculating the consumption costs of a household having flowmeters.

As the measured consumption data are sensitive data because they give information about the daily life of a person, it must be ensured that these data are not abused by a third person. Further, it must be avoided that a person manipulates the data for decreasing the billing cost. Thus, the consumption data measured by a flowmeter are encrypted before transmitting to a readout unit. In the read out unit the encrypted data are decrypted.

In the encryption operation, a secret key known by the receiver and the transmitter and an initialization vector are combined. The initialization vector must be the same for the receiver and the transmitter.

In this network of remotely read out flowmeters the user of the mobile unit reading out the flowmeters within a frequency of several months does not want to wait for hours until he gets a data telegram from the flowmeter containing the information about the consumption data. Therefore, the flowmeter sends encrypted telegrams on a very short time scale. The flowmeter sends a lot of encrypted telegrams which will never be received by a readout unit. The number of sent encrypted telegrams and the number of received encrypted telegrams differ.

Figures 1 and 2 show a method for having the same initialization vector in the receiver and in the transmitter even if the transmitter sends a different number of encrypted data telegrams which the receiver decrypts.

The transmitter and the receiver have an internal clock for having information about the internal time.

In this method, firstly, the actual time of day and a constant day time grid with time slots Uₗ having a first period t₁ are provided, I being an integer like 1, 2, 3.... The period t₁ of a time slot might be for example 4 hours. Then an initial time slot U₀ is defined, wherein the actual time of day lies in the period of the initial time slot U₀ of the day time grid. It is advisable to define an initial value of the day time grid in order to have an identical day time grid in the receiver and in the transmitter.

Additionally, a counter Z with counter values Zₙ, n being an integer like 1, 2, 3.... having an initial counter value Z₀ is defined. An adapted time D with adapted time values Dₘ is created, the adapted time values Dₘ, n being an integer like 1, 2, 3...., having an initial adapted time value D₀ within the initial time slot U₀. In the method shown, the initial adapted time value D₀ is identical to the first time value of the initial time slot U_{0.}

The counter Z is a number and the counter value Zₙ is an integer. The counter value Zₙ can be incremented or decremented by an integer. The time duration after which the counter value Zₙ is incremented or decremented should preferably be periodic in that the counter cycles in each time slot of the day time grid are identical. In this embodiment the counter values Zₙ are incremented or decremented periodically after a second period t₂ the period t₂ being shorter than the period t₁.

For use in an initialization vector, the adapted time value D₀ and the initial counter value Z₀ are combined.

For creating a new and different initialization vector the initial counter value Z₀ is changed to Z₁= Zₒ+i after each period t₂, i being for example a positive or negative integer. After that, the adapted time value D₀ and the changed counter value Z₁ are combined for using the combined adapted time value D₀ and the changed counter value Z₁ in a new initialization vector. The last two steps are repeated until the actual time is outside the initial time slot U₀, wherein each time a new initialization vector is created, the value of the counter vector Z is changed from Zₙ to Zₙ + i , wherein i might be different in each incremental or decremental step. Then, the actual time slot U₀ is set to the subsequent time slot U₁

Having a new adapted time value D₁ and an initial counter value Z₀, the described method can be repeated again. The described method can be repeated as long as required.

The initialization vectors can be used for cryptographic operation if desired. However it is not necessary to use the initialization vector each time a new initialization vector is provided.

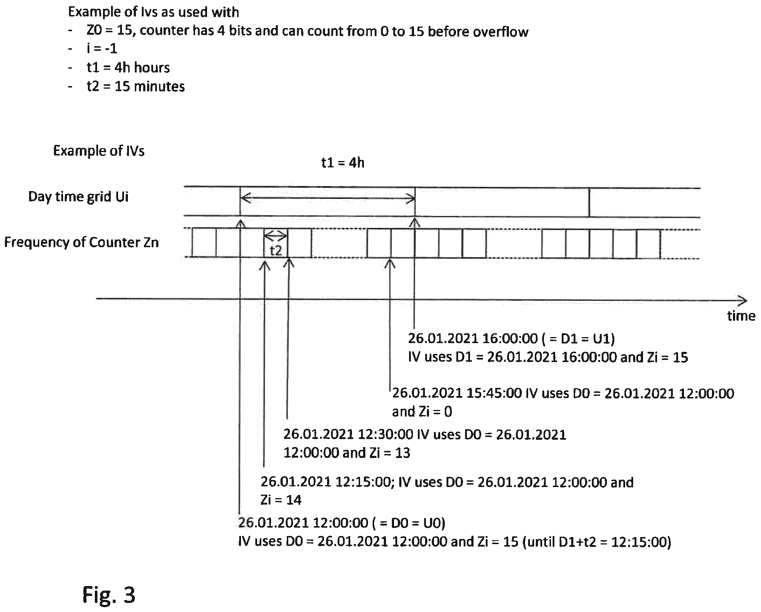

Fig. 3 shows a concrete example of a method for creating a plurality of initialization vectors.

The counter Z has 4 bits and can count from 0 to 15 before overflow. The counter decrements in that i = -1. The period t₁ of the time slot Uₗ is 4 hours and the period t₂ of the decremental steps of the counter is 15 minutes.

The initial value of the day time grid is 26.01.2021 12:00:00.The adapted time value D₀ is a constant time value within the initial time slot. In the shown case D₀ is 26.01.2021 12:00:00, which is the initial time value of the initial time slot U₀.

The first counter value Z₀ is 15. For creating an initialization vector the adapted time value D₀ = 26.01.2021 12:00:00 and the first counter value Z₀ = 15 are combined. For creating a new and different initialization vector the initial counter value Z₀ = 15 is changed to Z₁= 14 after 15 minutes. After that the adapted time value D₀ = 26.01.2021 12:00:00 and the changed counter value Z₁= 14 are combined for using in a new initialization vector. The last two steps are repeated every 15 minutes until the actual time is outside the initial time slot U₀, which is at 26.01.2021 16:00:00, wherein each time a new initialization vector is created the counter vector is decremented. At 26.01.2021 16:00:00 an new adapted time value D₁ = 26.01.2021 16:00:00 is created and the counter value is set to Z₀ = 15. For creating a new and different initialization vector the initial counter value Z₀ = 15 is changed to Z₁= 14 after every 15 minutes.

In methods not shown, the adapted time value might be any time value within a given time slot. If the time slot is for example from 16:00:00 to 20:00:00 at a given day, the adapted time value is a time value having any value from 16:00:00 to 19:59:59. It is an advantage if the adapted time value D₀ is either the first time value or the last time value of a time slot U₀. In this case the adapted time value D₀ contains information about the day time grid which can be compared with the first time value or the last time value of the day time grid of the receiver.

It is not necessary that the adapted time value has the same accuracy as the actual time in that the adapted time value might be shortened, e.g. truncated or rounded. Instead of the whole value year-month- day- hours-minutes-seconds as for example "[date] 16:00:00" it is sufficient to reduce the adapted time value to year-months- day- hours as for example "[date] 16" . This can reduce the length of the initialization vector.

It is advisable to increase the new adapted time value D₁ by the same period t₁ as time slots in the day time grid. If for example the time slot of the initial value of the day has a duration of four hours the adapted time value D₁ will be increased by four hours. In the given example the adapted time value in the subsequent time slot is "[date] 20".

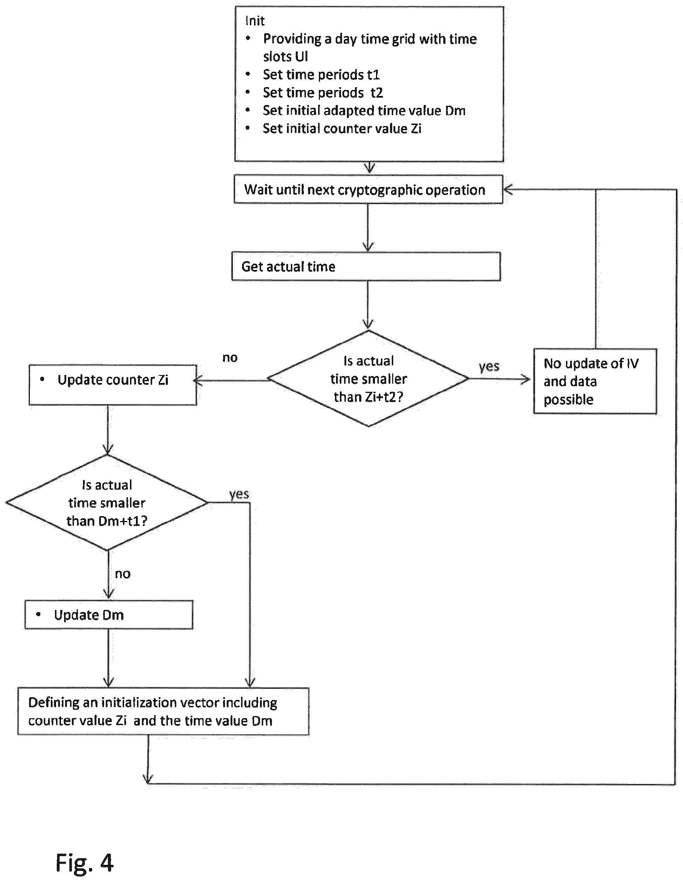

Figure 4 shows a first method for encrypting data and transmitting encrypted data in a remote transfer of user data using an initialization vector being performed by a transmitter.

In this embodiment a cryptographic operation is required not periodically, but especially on demand. Each time a cryptographic operation with a new initialization vector is required, there is a check if a cryptographic operation was already performed within the time period t₂ of the counter. In case a cryptographic operation was already performed, the initialization vector will be updated. Otherwise the message data as for example consumption data are combined with the initialization vector provided according to the method described above.

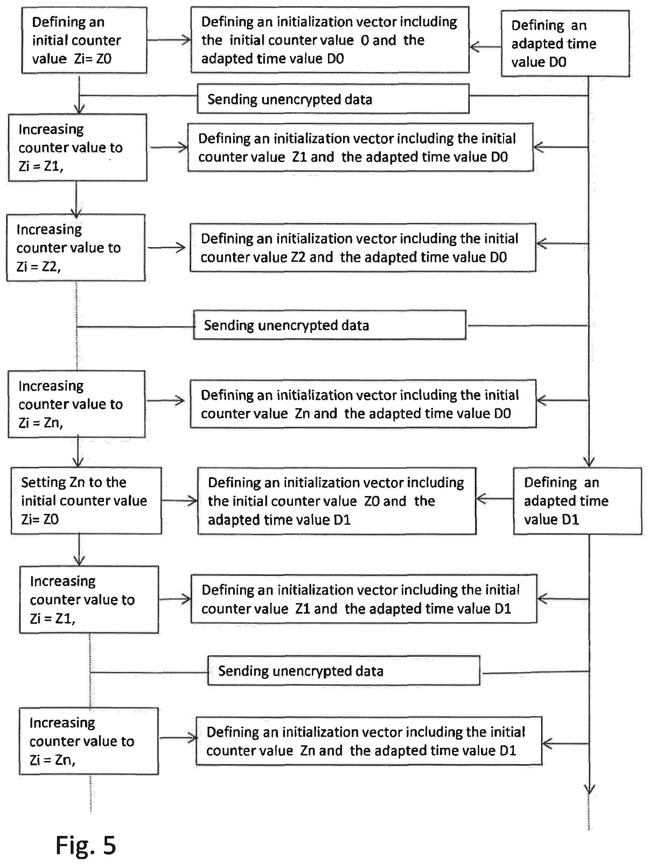

Fig. 5 shows an embodiment in which unencrypted data are sent without using initialization vectors, wherein the unencrypted data are sent between the creation of two different initialization vectors. Thus, sending unencrypted data does not influence the creation of different initialization vectors.

In an embodiment not shown, encrypted data with a defined initialization vector might be repeatedly sent within the same time period t₂.

Identical message data having the same initialization vector might be sent for example at a frequency of 15 seconds if the period t₂ of the change of a counter value has a duration of for example 15 minutes. After 15 minutes a new encrypted data telegram containing new message data and a new initialisation vector are sent.

This enables the sending of encrypted data telegrams within a very short frequency while reducing the energy consumption of forming encrypted data telegrams.

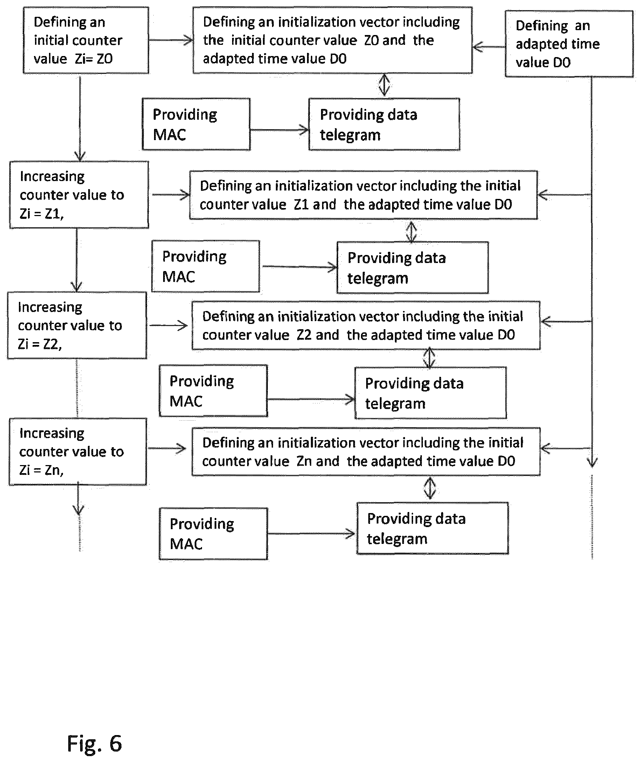

Fig. 6 shows a third embodiment of a method for defining a plurality of initialization vectors.

The method according to Fig. 6 differs from the methods already described in that each encrypted telegram is provided with a message authentication code (MAC). A MAC is useful to get to know if the data received by the receiver are really sent by the transmitter supposed to be the right transmitter.

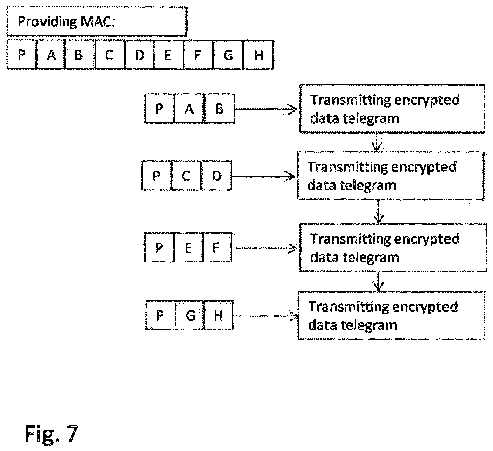

Fig. 7 refers to a method wherein an encrypted telegram is transmitted several times before changing the initialization vector and wherein a MAC is used.

In the special case in which the counter has a counter value Zₙ changing with a period of t₂ the same message data are repeatedly transferred within one period t₂, wherein the initialization vector is changed neither. Identical message data having the same initialization vector might be sent for example at a frequency of 15 seconds if the period t₂ of the change of a counter value has a duration of for example 15 minutes. After 15 minutes a new encrypted data telegram containing new message data and a new initialisation vector are sent.

Each sent telegram containing identical message data and initialization vector might be combined with a MAC.

In order to decrease the length of such an encrypted data telegram having a MAC, an added MAC might be cut in fragments as shown in Fig. 7. This facilitates a very short telegram length.

The whole MAC containing 8 bytes, namely A to H is divided into 4 packets having each 2 bytes. With each transmitted identical encrypted data telegram, one block of the MAC is transmitted. First the block containing the bytes AB, then the block containing the bytes CD, after that the block containing the bytes EF and finally the block containing the bytes GH are transferred. After 4 transmitted encrypted data telegrams the whole MAC might be obtained by combining the MAC of the last 4 encrypted data telegrams. In order to find the right position of the MAC in the original MAC, a position hint P might be added to the cut MAC block.

It is obvious that the cutting of the MAC into fragments can also be done with a MAC having a different number of bytes or with fragments having a different length.

The method has been described with respect to consumption data as message data. The message data might be any kind of other data including alarm data. In case of alarm data the frequency of the period t₁ of the value of the time of day and the period t₂ of the counter value might be adapted to even shorter frequencies.

The scope of the present invention also comprises embodiments, which are a combination of the embodiments described only with respect to one of the figures, wherein some of the described features might be omitted.

## Claims

1. Method for encrypting data and transmitting encrypted data in a remote transfer of user data, the method using initialization vectors, wherein the creation of a plurality of different initialization vectors comprises the following steps:
a) providing the actual time of day and a constant day time grid with time slots Uₗ having a first period t₁,
b) defining an initial time slot U₀, wherein the actual time of day lies in the period of the initial time slot U₀ of the day time grid,
c) defining a counter Z with counter values Zₙ having an initial counter value Z₀',
d) defining an adapted time D with adapted time values Dₘ, the adapted time values Dₙ having an initial adapted time value D₀ within the initial time slot U₀,
e) combining the initial adapted time value D₀ and the initial counter value Z₀ for using in an initialization vector,
f) changing the initial counter value Z₀ to a new counter value Z₁= Z₀ +i, i being a figure, preferably an integer,
g) combining the initial adapted time value D₀ and the new counter value Z₁ for using in a new initialization vector,
h) repeating the steps f) and g), wherein in step g) the new counter value Zₙ₊₁ is set to Zₙ +i, until the actual time is outside the initial time slot,
i) setting the initial time slot U₀ to the subsequent time slot U₁, setting the counter value Zₙ₊ᵢ to the initial counter value Z₀ and creating another adapted time value D₁, with the adapted time value D₁ being a time value within the subsequent time slot U₁.

2. Method according to claim 1, **characterized in that** the steps e) to i) are repeated, wherein in step i) the adapted time value Dₘ is set to a time value within the subsequent time slot Uₘ following the time slot Uₘ₋₁.

3. Method according to any one of the preceding claims, **characterized in that** an initial value of the day time grid is set.

4. Method according to any one of the preceding claims, **characterized in that** the adapted time value Dₘ is a constant time value within the respective time slot Uₗ.

5. Method according to any one of the preceding claims, **characterized in that** the adapted time value Dₘ is shortened.

6. Method according to any one of claims 4 or 5, **characterized in that** an initial value for each time slot Uₗ is defined, wherein the adapted time value Dₘ is the first value of each time slot Uₗ.

7. Method according to any one of the preceding claims, **characterized in that** the first period t₁ is in the range of hours and **in that** the counter value Zₙ is changed in the range of minutes.

8. Method according to claim 7, **characterized in that** the counter value Zₙ is changed periodically with a frequency having a period t₂, wherein preferably, the ratio of the first period t₁ to the second period t₂ is an integer.

9. Method according to any one of the preceding claims wherein the creation of a plurality of different initialization vectors comprises the following steps:
a) providing the actual time of day and a constant day time grid with time slots Uₗ having a first period t₁,
b) defining an initial time slot U₀, wherein the actual time of day lies in the period of the initial time slot U₀ of the day time grid,
c) defining a counter Z with counter values Zₙ having an initial counter value Z₀ and a time grid for the counter values Zₙ, the time grid having a time slot of a second period t₂ being shorter than the first period t₁,
d) defining an adapted time D with adapted time values Dₘ, the adapted time values Dₘ having an initial adapted time value D₀ within the initial time slot U₀ and being preferably a rounded or shortened time value within the initial time slot U₀,
e) combining the initial adapted time value D₀ and the initial counter value Z₀ for using in an initialization vector,
f) changing the initial counter value Z₀ to a new counter value Z₁= Z₀ +i, i being a figure, preferably an integer if the second period t₂ ends,
g) combining the adapted time value D₀ and the new counter value Z₁ for using in a new initialization vector,
h) repeating the steps f) to g), wherein in step f) the new counter value Zₙ₊₁ is set to Zₙ +i, until the actual time is outside the initial time slot U₀,
i) setting the actual time slot U₀ to the subsequent time slot U₁, setting the counter value Zₙ₊ᵢ to the initial counter value Z₀ and creating an adapted time value D₁, with the adapted time value D₁ being a shortened time value within the subsequent time slot U₁,
j) repeating steps e) to i) wherein in step i) the adapted time value Dₘ is set to a time value within the subsequent time slot Uₗ following the time slot Uₗ₋₁.

10. Method according to any one of the preceding claims, **characterized in that** the initialization vector is used with data for forming an encrypted data telegram.

11. Method according to claim 10, **characterized in that** an encrypted data telegram is formed and the encrypted data telegram is transmitted at least two times.

12. Method according to any one of claims 10 or 11, **characterized in that** a time grid for the counter value Zₙ is provided, wherein the time grid has a time slot of a second period t₂ being shorter than the first period t_{1,} wherein an encrypted data telegram is formed and the encrypted data telegram is transmitted at least two times within the second period.

13. Method according to any one of the preceding claims, **characterized in that** additionally unencrypted data are transmitted.

14. Method according to any one of the preceding claims, **characterized in that** a message authentication code (MAC) is provided and added to the encrypted data.

15. Method according to claim 14, **characterized in that** a MAC is cut in defined segments, wherein each segment is transmitted in successive data transfers.
